# EUROPÄISCHE PATENTSCHRIFT

(11) **EP 3 661 719 B1**
(45) Veröffentlichungstag und Bekanntmachung des Hinweises auf die Patenterteilung: **05.04.2023**
(21) Anmeldenummer: 18733840.5
(22) Anmeldetag: 20.06.2018
(51) Int. Cl.: B29C 45/17, B29C 45/00, B60R 13/02, B29L 31/30, B29C 45/14

(54) **VERFAHREN UND VORRICHTUNG ZUM HERSTELLEN EINES VERKLEIDUNGSTEILS EINES KRAFTFAHRZEUGS, VERWENDUNG DER VORRICHTUNG**
METHOD AND DEVICE FOR PRODUCING A TRIM PART OF A MOTOR VEHICLE, USE OF THE DEVICE
PROCÉDÉ ET DISPOSITIF POUR FABRIQUER UN ÉLÉMENT D'HABILLAGE D'UN VÉHICULE À MOTEUR, UTILISATION DU DISPOSITIF

(30) Priorität: 03.08.2017 DE 102017213453
(43) Veröffentlichungstag der Anmeldung: 10.06.2020
(73) Patentinhaber: Volkswagen Aktiengesellschaft, 38440 Wolfsburg (DE)
(72) Erfinder: OSTWALD, Stefan, 31185 Söhlde (DE)
(86) Internationale Anmeldenummer: PCT/EP2018/066471
(87) Internationale Veröffentlichungsnummer: WO 2019/025074

(56) Entgegenhaltungen:
- FR-A1- 2 989 302
- US-A1- 2005 127 577

## Beschreibung

Die Erfindung betrifft ein Verfahren zum Herstellen eines eine Sichtseite und eine Montageseite aufweisenden und dreidimensional geformten Verkleidungsteils eines Kraftfahrzeugs.

Außerdem betrifft die Offenbarung eine Vorrichtung zum Herstellen eines Verkleidungsteils, mit einem Spritzgusswerkzeug, das zumindest zwei Formschalen aufweist, die zusammengesetzt eine Kammer mit einer Negativform des Verkleidungsteils bilden.

Außerdem betrifft die Offenbarung eine vorteilhafte Verwendung der Vorrichtung.

Verfahren zum Herstellen von Verkleidungsteilen sowie Vorrichtungen zum Herstellen von Verkleidungsteilen sind aus dem Stand der Technik bekannt. So offenbart beispielsweise die Offenlegungsschrift DE 10 2014 202 001 A1 die Herstellung eines Bauteils mithilfe eines sogenannten Gasinnendruckverfahrens. Dabei wird das fließfähige Material in die Kammer eines Spritzgusswerkzeugs eingebracht und ein Gasinnendruck in dem Material erzeugt, welcher das Material gegen die Formschalen des Spritzgusswerkzeugs drängt, um eine sichere Anlage zu gewährleisten. Es wird somit von innen nach außen ein Druck erzeugt, der sicherstellen soll, dass die Kontur der Formschalen vollständig auf die Kontur des Materials im ausgehärteten Zustand übertragen ist. Jedoch kann es hierbei dazu kommen, dass an der Sichtseite beziehungsweise Außenseite des Bauteils Einfallstellen beim Aushärten beziehungsweise Abkühlen entstehen, wenn aufgrund der Volumenkompensation beim Aushärten des Materials sich dieses verformt. Diese Einfallstellen können zu einer Reduzierung der Robustheit des Bauteils insgesamt führen und stören vor allem optisch, wenn das Bauteil als Sichtteil, insbesondere als Verkleidungsteil im Innenraum oder Außenraum eines Kraftfahrzeugs verwendet wird. Die Offenlegungsschrift DE 10 2005 038 469 A1 offenbart ein Gasaußendruckverfahren zur Herstellung eines Verkleidungsteils. Aus der Offenlegungsschrift US 2005/127577 A1 geht ein Verfahren zur Herstellung eines Bauteils hervor, gemäß dem zunächst eine Haut in ein Spritzgießwerkzeug eingelegt wird. Anschließend wird die Haut durch Gasdruck gegen eine Formschale des Spritzgusswerkzeugs gepresst. Die Offenlegungsschrift FR 2 989 302 A1 offenbart ein weiteres Verfahren zum Herstellen eines Bauteils. Dabei ist vorgesehen, dass ein Spritzgusswerkzeug vor dem Zuführen von fließfähigem Material erwärmt wird. Die Offenlegungsschrift WO 2016 193 384 A1 offenbart ein weiteres Verfahren zum Herstellen eines Verkleidungsteils mittels Spritzgießen.

Der Erfindung liegt daher die Aufgabe zugrunde, ein verbessertes Verfahren zu schaffen, das das Entstehen von Einfallstellen an der Sichtseite des Verkleidungsteils verhindert oder zumindest verringert.

Die der Erfindung zugrundeliegende Aufgabe wird durch ein Verfahren mit den Merkmalen des Anspruchs 1 gelöst. Das erfindungsgemäße Verfahren hat den Vorteil, dass in einfacher Art und Weise, insbesondere ohne mechanische Nachbearbeitung, Einfallstellen an der Sichtseite des Bauteils vermieden oder zumindest verringert werden. Erfindungsgemäß gestaltet sich dazu das Verfahren durch die folgenden Schritte: Zunächst wird das fließfähige Material in eine Kammer eines Spritzgusswerkzeugs eingebracht, wobei das Spritzgusswerkzeug zumindest zwei Formschalen aufweist, die zusammengesetzt die Kammer mit einer Negativform des Verkleidungsteils bilden. Zumindest eine erste der Formschalen formt dabei die Sichtseite des Verkleidungsteils, bildet oder definiert also dessen sichtseitige Form aus. Außerdem formt dabei zumindest eine zweite der Formschalen die Montageseite des Verkleidungsteils. Das Material wird in der Kammer ausgehärtet, um am Ende des Verfahrens das fertige Verkleidungsteil aus der Kammer entnehmen zu können. Weil die Formschalen bereits die Negativform des Verkleidungsteils bilden, kann am Ende des Verfahrens das fertige oder zumindest nahezu fertige Verkleidungsteil aus der Kammer entnommen werden, nachdem die Formschalen voneinander gelöst wurden. Während des Aushärtens des Materials in der Kammer wird erfindungsgemäß ein Gasdruck erzeugt, der flächig zwischen der zweiten Formschale und dem Material in der Kammer wirkt, sodass das Material von der Oberfläche der Formschale durch den Gasdruck weggedrängt wird. Durch Verwendung von Gas als Druckmittel wird dabei erreicht, dass der Druck automatisch gleichmäßig zwischen der zweiten Formschale und dem Material wirkt, sodass dieses gleichmäßig druckbelastet ist, wodurch beim Aushärten und der Volumenkompensation das Material derart verformt ist oder wird, dass Einfallstellen nicht oder nur in verringertem Umfang auftreten können. Nach dem erfolgten Aushärten wird dann das Verkleidungsteil aus der Kammer des Spritzgusswerkzeugs entfernt beziehungsweise entnommen, ohne dass an der Sichtseite Einfallstellen oder zumindest größere Einfallstellen bestehen. Somit wird in einfacher Art und Weise ein fertiges oder nahezu fertiges Verkleidungsteil erhalten. Gegebenenfalls müssen noch Grate oder ähnliche für die Herstellung notwendige oder durch die Herstellung bedingte überschüssige Materialbestände von dem Verkleidungsteil entfernt werden.

Gemäß einer bevorzugten Weiterbildung der Erfindung ist vorgesehen, dass der Gasdruck erst nach Ablauf einer Anfangsphase des Aushärtens erzeugt wird. Dadurch wird erreicht, dass zunächst insbesondere die der ersten Formschale zugewandte Seite des Materials gemäß der Form der Formschale aushärtet, sodass sich die Form der Sichtseite durch den anschließend erzeugten Gasdruck nicht mehr verändert. Sobald das Aushärten derart weit vorgedrungen ist, dass davon ausgegangen werden kann, dass keine oder zumindest keine größeren Einfallstellen mehr entstehen können, kann der Gasdruck auch reduziert oder ganz entfernt werden. Dadurch wird der Energieaufwand zum Erzeugen des Gasdrucks reduziert und insgesamt der Energieaufwand zur Herstellung des Verkleidungsteils optimiert.

Alternativ wird der Gasdruck bis zum Ende der Aushärtungszeit erzeugt, um zu gewährleisten, dass das Material nicht zurück an die Formschale gelangt und in seiner Endform bis zum fertigen Aushärten verbleibt.

Weiterhin ist bevorzugt vorgesehen, dass an der Montageseite des Verkleidungsteils zumindest ein Strukturelement, insbesondere eine Versteifungsrippe, und/oder wenigstens ein Haltevorsprung angeformt oder ausgebildet werden. So können die Versteifungsstruktur und/oder der Haltevorsprung nachträglich angeformt oder durch die entsprechende Formgestalt der der Montageseite zugeordneten Formschale beim Spritzgießen gleich mitgeformt werden.

Weiterhin ist erfindungsgemäß vorgesehen, dass zumindest die erste Formschale während des Aushärtens gekühlt wird. Dadurch wird der Aushärtungsprozess beschleunigt, insbesondere an der Sichtseite, sodass der Gasdruck früher reduziert werden kann, sobald die Sichtseite ausreichend ausgehärtet ist.

Die Vorrichtung zeichnet sich dadurch aus, dass der zweiten Formschale zumindest ein Gasdruckkanal zugeordnet ist, der in die Kammer mündet, um einen Gasdruck zwischen der zweiten Formschale und dem in der Kammer befindlichen Material zu erzeugen und um das Material gegen die erste Formschale zu drücken. Es ergeben sich hierdurch die zuvor bereits genannten Vorteile.

Die Verwendung der zuvor genannten Vorrichtung sieht vor, dass die Vorrichtung zur Herstellung eines eine Sichtseite und eine Montageseite aufweisenden und dreidimensional geformten Verkleidungsteils eines Kraftfahrzeugs verwendet wird. Hierdurch ergeben sich für das Verkleidungsteil die zuvor bereits genannten Vorteile.

Weitere Vorteile und bevorzugte Merkmale und Merkmalskombinationen ergeben sich insbesondere aus dem zuvor Beschriebenen sowie aus den Ansprüchen.

Im Folgenden soll die Erfindung anhand der Zeichnung näher erläutert werden. Dazu zeigen
- Figur 1: eine vorteilhafte Vorrichtung zur Herstellung eines Verkleidungsteils in einer vereinfachten Schnittdarstellung und
- Figur 2: ein vorteilhaftes Verfahren zum Betreiben der Vorrichtung der Fig. 1.

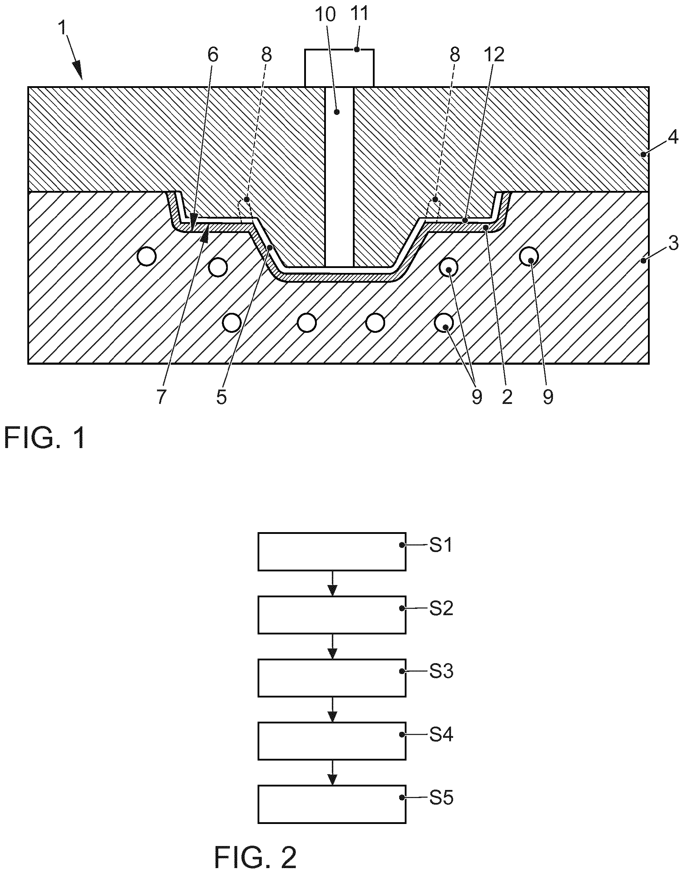

Figur 1 zeigt in einer vereinfachten Darstellung ein Ausführungsbeispiel einer Vorrichtung 1 zur Herstellung eines eine Sichtseite 6 und eine Montageseite 7 aufweisenden Verkleidungsteils 2.

Die Vorrichtung 1 weist zwei Formschalen 3 und 4 auf, die derart komplementär zueinander ausgebildet sind, dass sie, wenn sie an ihren Randbereichen aufeinander aufliegen, zwischen sich eine Kammer 5 ausbilden, die der Negativform des Verkleidungsteils 2 zumindest im Wesentlichen entspricht. Dabei ist gemäß dem vorliegenden Ausführungsbeispiel die in Fig. 1 untenliegende erste Formschale 3 der Sichtseite 6 und die in Fig. 1 obenliegende zweite Formschale 4 der Montageseite 7 des Verkleidungsteils 2 zugeordnet. Die Montageseite 7 unterscheidet sich von der Sichtseite 6 unter anderem dadurch, dass sie ein oder mehrere Strukturelemente 8 aufweist, die beispielsweise als Versteifungsrippen oder Haltevorsprünge ausgebildet sind, mittels welcher das Verkleidungsteil 2 beispielsweise an einer Karosserie oder an anderen Strukturelementen eines Kraftfahrzeugs befestigbar ist. Die Sichtseite 6 weist eine insbesondere glatte Oberfläche auf, die als Sichtfläche beispielsweise dem Fahrzeuginnenraum des Kraftfahrzeugs zugeordnet ist. Insofern werden an die Sichtseite hohe Ansprüche an den optischen Eindruck gestellt, während an die rückwertige Montageseite 7 erhöhte Ansprüche an die Befestigungsmöglichkeiten gestellt werden, der optische Eindruck jedoch weniger relevant ist.

Die erste Formschale 3, die der Sichtseite 6 zugeordnet ist, weist außerdem mehrere Kühlmittelkanäle 9 auf, durch welche ein Kühlmittel förderbar ist, um die Formschale 3 zu kühlen. Entsprechende Kühlmittelkanäle 9 sind optional auch in der oberen Formschale 4 ausgebildet.

Außerdem weist die zweite Formschale 4 einen Gasdruckkanal 10 auf, der mit einer Gasdruckquelle 11, die in Figur 1 vereinfacht gezeigt ist, verbunden ist. In dieser Gasdruckquelle 11 kann ein Gasdruck erzeugt und durch den Gasdruckkanal 10 zu der Kammer 5 geführt werden. Der Gasdruckkanal 10 mündet hierzu in die Kammer 5 auf der Montageseite 7 des Verkleidungsteils 2.

Anhand von Figur 2 soll nunmehr ein vorteilhaftes Verfahren zum Herstellen des Verkleidungsteils 2 mittels der Vorrichtung 1 erläutert werden.

In einem ersten Schritt S1 werden die Formschalen 3 und 4 zusammengesetzt, sodass sie die zumindest im Wesentlichen geschlossene Kammer 5 bilden. In einem darauffolgenden Schritt S2 wird ein fließfähiges Material in die Kammer 5 eingebracht, insbesondere durch Spritzgießen. Bei dem Material handelt es sich beispielsweise um Kunststoff oder um ein Kunststoff aufweisendes Material.

Sobald das Material vollständig in die Kammer 5 eingebracht ist, wird in einem darauffolgenden Schritt S3 mittels der Gasdruckquelle 11 ein Gasdruck erzeugt, der sich durch den Gasdruckkanal 10 zwischen das Material und die zweite Formschale 4 drängt und dadurch das Material in Richtung der ersten Formschale 3 mit einem Gasdruck beaufschlagt. Insbesondere wirkt sich der Gasdruck dabei gleichmäßig über die gesamte Oberfläche der Montageseite 7 des späteren Verkleidungsteils 2 aus.

Gemäß einem ersten Ausführungsbeispiel wird der Gasdruck im Schritt S3 unmittelbar nach dem Einfüllen des Materials erzeugt. Gemäß einem weiteren Ausführungsbeispiel wird der Gasdruck erst dann erzeugt, nachdem ein erster Aushärtungsprozess des Materials bereits erfolgt ist. Optional wird zunächst mittels der Kühlmittelkanäle 9 ein Kühlmittel durch die erste Formschale 3 gefördert, sodass die der Sichtseite 6 zugewandte Formschale 3 abkühlt und das Material in der Kammer 5 an der der ersten Formschale 3 zugewandten Seite schneller abkühlt als das Material an der der zweiten Formschale 4 zugewandten Seite. Dadurch wird die Formgestalt des Verkleidungsteils 2 an der Sichtseite 6 zuerst angehärtet oder ausgehärtet. Gemäß diesem Ausführungsbeispiel wird erst dann der Gasdruck erzeugt, sodass das bereits angehärtete oder ausgehärtete Material von der zweiten Formschale 4 weggedrückt wird. Hierdurch ergibt sich zwischen der zweiten Formschale 4 und dem Material beziehungsweise Verkleidungsteil 2 eine Gasdruckkammer 12 in der Kammer 5, durch welche das Verkleidungsteil 2 gleichmäßig gegen die erste Formschale 3 gepresst wird, sodass ein Verziehen oder das Entstehen von Einfällen an der Sichtseite 6 des Verkleidungsteils 2 verhindert oder zumindest verringert wird. Dadurch ist sichergestellt, dass die Sichtseite 6 des Verkleidungsteils 2 die gewünschte Struktur und Oberflächenbeschaffenheit aufweist. Der Gasdruck wird solange aufrecht erhalten, bis das Verkleidungsteil 2 vollständig ausgehärtet ist. Dies hat den Vorteil, dass keine Einfallstellen im Material an der Sichtseite 6 des Verkleidungsteils 2 aufgrund von Volumenveränderungen, die durch Temperaturänderungen entstehen, entstehen können. Das Material verzieht sich somit im weiteren Aushärtungsprozess nicht an der Sichtseite 6. Dadurch erhält das Verkleidungsteil 2 an der Sichtseite 6 eine optimale Materialbeschaffenheit mit optisch hochwertigem Eindruck und vorteilhaften mechanischen Eigenschaften.

Nachdem das Material vollständig ausgehärtet ist, werden die Formschalen 3, 4 in einem Schritt S4 voneinander getrennt und im darauffolgenden Schritt S5 das fertige Verkleidungsteil 2 aus der Kammer 5 entnommen.

### Bezugszeichenliste

- 1: Vorrichtung
- 2: Verkleidungsteil
- 3: Formschale
- 4: Formschale
- 5: Kammer
- 6: Sichtseite
- 7: Montageseite
- 8: Strukturelement
- 9: Kühlmittelkanal
- 10: Gasdruckkanal
- 11: Gasdruckquelle
- 12: Gasdruckkammer
- S1: Schritt
- S2: Schritt
- S3: Schritt
- S4: Schritt
- S5: Schritt

## Patentansprüche

1. Verfahren zum Herstellen eines eine Sichtseite (6) und eine Montageseite (7) aufweisenden und dreidimensional geformten Verkleidungsteils (2) eines Kraftfahrzeugs, mit folgenden Schritten:
- Druckspritzen eines fließfähigen Materials in eine Kammer (5) eines Spritzgusswerkzeugs, das zumindest zwei Formschalen (3,4) aufweist, die zusammengesetzt die Kammer (5) mit einer Negativform des Verkleidungsteils (2) bilden, wobei zumindest eine erste der Formschalen (3) die Sichtseite (6) und zumindest eine zweite der Formschalen (4) die Montageseite (7) des Verkleidungsteils (2) formt,
- Aushärten des Materials in der Kammer (5) und
- Erzeugen eines Gasdrucks, der flächig zwischen der zweiten Formschale (4) und dem Material während des Aushärtens wirkt,
- Entnehmen des ausgehärteten Materials als Verkleidungsteil (2) aus der Kammer (5) des Spritzgusswerkzeugs,
- **dadurch gekennzeichnet, dass** zumindest die erste Formschale (3) während des Aushärtens gekühlt wird und durch den erzeugten Gasdruck das Material flächig gegen die die erste Formschale (3) gepresst wird , sodass das Material in der Kammer (5) an der der ersten Formschale (3) zugewandten Seite schneller abkühlt als das Material an der der zweiten Formschale (4) zugewandten Seite.

2. Verfahren nach dem vorhergehenden Anspruch, **dadurch gekennzeichnet, dass** der Gasdruck erst nach Ablauf einer Anfangsphase des Aushärtens erzeugt wird.

3. Verfahren nach einem der vorhergehenden Ansprüche, **dadurch gekennzeichnet, dass** der Gasdruck bis zum Ende der Aushärtungszeit erzeugt wird.

4. Verfahren nach einem der vorhergehenden Ansprüche, **dadurch gekennzeichnet, dass** an der Montageseite (7) des Verkleidungsteils (2) zumindest ein Strukturelement (8), insbesondere eine Versteifungsrippe, und/oder wenigstens ein Haltevorsprung angeformt oder ausgebildet werden.

## Claims

1. A method for producing a three-dimensionally shaped trim part (2) of a motor vehicle, which part has a visible side (6) and a mounting side (7), the method comprising the following steps:
- pressure-injecting a flowable material into a chamber (5) of an injection molding tool which has at least two mold shells (3, 4) which, when assembled together, form the chamber (5) having a negative mold of the trim part (2), at least one first of the mold shells (3) shaping the visible side (6) and at least one second of the mold shells (4) shaping the mounting side (7) of the trim part (2),
- curing the material in the chamber (5), and
- generating a gas pressure which acts in a planar manner between the second mold shell (4) and the material during curing,
- removing the cured material, as a trim part (2), from the chamber (5) of the injection molding tool,
- **characterized in that** at least the first mold shell (3) is cooled during the curing and the material is pressed flat against the first mold shell (3) by the generated gas pressure, so that the material in the chamber (5) cools faster on the side facing the first mold shell (3) than the material on the side facing the second mold shell (4).

2. The method according to the preceding claim, **characterized in that** the gas pressure is generated only after an initial phase of the curing has elapsed.

3. The method according to either of the preceding claims,
**characterized in that** the gas pressure is generated until the end of the curing time.

4. The method according to any of the preceding claims, **characterized in that** at least one structural element (8), in particular a reinforcing rib, and/or at least one retaining projection are molded or formed on the mounting side (7) of the trim part (2).

## Revendications

1. Procédé pour fabriquer un élément d'habillage (2) d'un véhicule à moteur de forme tridimensionnelle et présentant une face visible (6) et une face de montage (7), comprenant les étapes suivantes :
- pulvériser sous pression un matériau coulant dans une chambre (5) d'un moule à injection, lequel présente au moins deux moules carapaces (3, 4), qui, une fois réunis, forment la chambre (5) présentant un moule négatif de l'élément d'habillage (2), dans lequel au moins un premier des moules carapaces (3) forme la face visible (6) et au moins un deuxième des moules carapaces (4) forme la face de montage (7) de l'élément d'habillage (2),
- faire durcir le matériau dans la chambre (5) et
- produire une pression de gaz qui agit de façon plane entre le deuxième moule carapace (4) et le matériau pendant le durcissement,
- prélever le matériau durci en tant qu'élément d'habillage (2) de la chambre (5) du moule à injection,
- **caractérisé en ce qu'**au moins le premier moule carapace (3) est refroidi pendant le durcissement et le matériau est pressé de manière plane par la pression de gaz produite contre le premier moule carapace (3), de sorte que le matériau dans la chambre (5) refroidisse plus vite sur la face tournée vers le premier moule carapace (3) que le matériau sur la face tournée vers le deuxième moule carapace (4).

2. Procédé selon la revendication précédente, **caractérisé en ce que** la pression de gaz est d'abord produite après expiration d'une phase initiale du durcissement.

3. Procédé selon l'une quelconque des revendications précédentes, **caractérisé en ce que** la pression de gaz est produite jusqu'à la fin du temps de durcissement.

4. Procédé selon l'une quelconque des revendications précédentes, **caractérisé en ce que**, sur la face de montage (7) de l'élément d'habillage (2), au moins un élément de structure (8), en particulier une nervure de raidissement, et/ou au moins une saillie de maintien sont moulées ou formées.
